(19) Europäisches Patentamt / European Patent Office / Office européen des brevets

(11) **EP 2 945 917 B1**

(12) **FASCICULE DE BREVET EUROPEEN**

(45) Date de publication et mention de la délivrance du brevet:
**06.11.2019 Bulletin 2019/45**

(21) Numéro de dépôt: **14705820.0**

(22) Date de dépôt: **16.01.2014**

(51) Int Cl.:
*C03C 17/36* (2006.01)   *E06B 9/24* (2006.01)
*F21S 11/00* (2006.01)   *C03C 17/06* (2006.01)

(86) Numéro de dépôt international:
**PCT/FR2014/050086**

(87) Numéro de publication internationale:
**WO 2014/111662 (24.07.2014 Gazette 2014/30)**

(54) **SUBSTRAT VERRIER TEXTURÉ POUR BÂTIMENT**

TEXTURIERTES GLASSUBSTRAT FÜR EIN GEBÄUDE

TEXTURED GLASS SUBSTRATE FOR A BUILDING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.01.2013 FR 1350515**

(43) Date de publication de la demande:
**25.11.2015 Bulletin 2015/48**

(73) Titulaire: **Saint-Gobain Glass France
92400 Courbevoie (FR)**

(72) Inventeurs:
• **SANDRE-CHARDONNAL, Etienne
F-44200 Nantes (FR)**
• **SCHIAVONI, Michele
F-75014 Paris (FR)**

(74) Mandataire: **Saint-Gobain Recherche
Département Propriété Industrielle
39 Quai Lucien Lefranc
93300 Aubervilliers (FR)**

(56) Documents cités:
**EP-A1- 1 072 752     DE-A1- 19 731 142
US-A- 720 138      US-A- 3 255 665
US-A- 4 519 675     US-A1- 2011 135 880
US-A1- 2011 310 473**

**Description**

L'invention concerne un substrat verrier à réflexion énergétique élevée pour équiper les façades externes des bâtiments.

L'expression « substrat verrier » désigne une feuille de verre monolithique recouverte le cas échéant d'une couche mince ou d'un empilement de plusieurs couches minces appliqué directement sur la feuille de verre.

Les vitrages représentent une part importante de la surface externe des bâtiments. Afin d'améliorer le confort des personnes occupant un bâtiment, on applique sur ses vitrages en façade des couches réfléchissantes, dites anti-solaires, afin de renvoyer vers l'extérieur une bonne partie du rayonnement solaire incident notamment hors du domaine du visible. Ces vitrages présentent ainsi une bonne transmission lumineuse dans le domaine du visible (380 à 780 nm) tout en réfléchissant efficacement les IR et les UV. La transmission des rayons lumineux dans le domaine du visible n'est cependant pas totale selon leur angle d'incidence. Ainsi, les rayons du soleil, si celui-ci est en position élevée, sont réfléchis vers le sol ou vers le bâtiment d'en face par les vitrages en façade des bâtiments, lesdits vitrages faisant office de miroirs à de tels angles. Cette réflexion peut éblouir des personnes à l'extérieur du bâtiment ce qui peut poser des problèmes de sécurité notamment s'il s'agit de conducteurs automobile. De plus, cette réflexion vers le sol de rayonnements solaires (visibles et non-visibles) contribue au réchauffement de la chaussée et plus généralement de tout ce qui se trouve au sol à proximité du bâtiment ce qui inclut les piétons et les autres bâtiments. Enfin, la réduction de l'albédo des villes est une préoccupation actuelle, nécessitant de trouver des moyens pour renvoyer vers le ciel une bonne partie du rayonnement solaire incident. Pour y parvenir, on a maintenant eu l'idée de munir le substrat verrier d'une texture en relief favorisant la réflexion dans une direction voisine voire identique à la direction du rayonnement incident. Ainsi, les rayons solaires incidents peuvent être réfléchis au moins partiellement vers le ciel.

Le document US3255665 enseigne un vitrage pour bâtiment contrôlant la transmission des rayons lumineux incidents. Au-delà d'un certain angle d'incidence, les rayons incidents ne passent pas à travers le vitrage. Cet effet est atteint par l'utilisation d'une lame d'air entre deux feuilles texturée et l'utilisation d'un revêtement totalement réfléchissant sur certaines surfaces de la texture. Le document EP1072752 offre un enseignement similaire. Le document US2011310473 enseigne un film à appliquer à la surface extérieure des bâtiments, ledit film comprenant une surface concave-convexe recouverte d'une couche procurant une réflexion totale de la lumière pour renvoyer celle-ci vers le haut.

L'invention concerne un substrat verrier comprenant une feuille de verre dont une des faces principales comprend des motifs en relief, une couche réfléchissante, notamment anti-solaire, étant appliquée sur la face principale comprenant lesdits motifs. Les motifs ont une géométrie telle que les rayons réfléchis sont renvoyés vers le ciel si les rayons incidents viennent du ciel. Dans le cas d'un verre plan non-texturé (surface lisse), un renvoi du rayon réfléchi exactement dans la direction opposée à celle du rayon incident ne se produit que lorsque le rayon incident est normal (angle de 90°) à la surface du verre. Dès que le rayon incident s'écarte de la normale, le rayon réfléchi s'écarte aussi de la normale, mais de l'autre côté de la normale par rapport au rayon incident. Ainsi, la normale au substrat est aussi la bissectrice de l'angle entre le rayon incident et le rayon réfléchi. Selon l'invention, la texture fait renvoyer le rayon réfléchit du même côté que le rayon incident par rapport à un plan horizontal normal au substrat verrier, ledit substrat verrier étant vertical.

Selon l'invention, le substrat verrier comprend une feuille de verre dont une des faces principales comprend des motifs en relief, une couche réfléchissante étant appliquée sur la face principale comprenant lesdits motifs. Le substrat revêtu de la couche réfléchissante est de préférence tel qu'il existe une bande spectrale d'au moins 50 nm de largeur entre 250 et 2500 nm pour laquelle la réflexion est supérieure à 20% et de manière encore préférée supérieure à 40% (en incidence normale). Généralement, il existe une bande spectrale d'au moins 50 nm de largeur entre 250 et 2500 nm et de préférence entre 780 et 2500 nm (infra-rouge solaire) et de manière encore préférée entre 780 et 1200 nm (domaine de l'infra-rouge dans lequel le rayonnement solaire est plus énergétique) pour laquelle la réflexion est supérieure à 20% et de préférence supérieure à 40%, et généralement inférieure 99%. Ceci signifie que le substrat revêtu de la couche réfléchissante a de préférence une réflexion supérieure à 20% et de manière encore préférée supérieure à 40% pour tout rayonnement dans une bande spectrale d'au moins 50 nm de largeur, ladite bande étant à l'intérieur du domaine du spectre solaire, c'est-à-dire entre 250 et 2500 nm. Si l'on souhaite que de la lumière solaire visible traverse le substrat verrier selon l'invention, en plus de la bande d'au moins 50 nm dont il vient d'être question, la transmission lumineuse TI mesurée selon la norme EN410 (illuminant D65 ; 2° observateur) est supérieure à 40% voire supérieure à 60%. Cette propriété d'un substrat verrier comprenant une couche de contrôle solaire d'avoir à la fois une forte réflectivité dans l'infra-rouge solaire et une bonne transmission dans le visible, est appelée « sélectivité » par l'homme du métier.

Ces valeurs de réflexion et de transmission valent pour une incidence normale (rayon incident formant un angle de 90° avec la surface de la couche) (la valeur de réflexion vaut généralement quel que soit l'angle d'incidence). Il s'agit d'une propriété du substrat revêtu de la couche indépendamment de tout motif en surface du substrat. Cette réflexion et cette transmission peuvent notamment être mesurée sur un substrat de même nature que le substrat selon l'invention (même verre de même épaisseur + même couche de même épaisseur), mais plan (sans motif).Ces valeurs de réflexion (minimales et maximales) et de transmission valent pour tout point ou la couche réfléchissante est appliquée.

La couche réfléchissante présente généralement une épaisseur comprise entre 10 nm et 1000 nm.

Le substrat est tel qu'il existe un plan H orthogonal au substrat de sorte que l'ensemble E des points de la surface du substrat tels que l'angle téta entre la normale locale à la surface et le plan H soit d'au moins 25°, représente plus de 30% et de préférence plus de 50% et de manière encore préférée plus de 80% de l'aire développée de la surface principale du substrat portant les motifs. Un substrat plan à la surface lisse sans aucune texture est exempt d'un tel plan H car toute normale à sa surface forme un angle nul avec tout plan orthogonal au substrat. Un substrat intégralement couvert d'une texture composée exclusivement de prismes identiques parallèle entre eux et dont les faces des prismes forment toutes (en valeur absolue) un angle de 25° avec le plan général du substrat (angle intérieur au motif), présente un seul plan H, lequel est parallèle aux arêtes des prismes. En effet, avec cette texture, tout point de la surface (donc 100% de la surface) a sa normale locale formant un angle de 25° avec le plan H. Par la suite, on prend également en considération un plan V orthogonal au substrat et orthogonal au plan H.

Cette condition sur l'angle téta traduit le fait que la surface du substrat comprenant la couche réfléchissante présente un relief prononcé. Ce relief prononcé est à l'origine du renvoie plus important des rayons lumineux solaires vers le ciel si le substrat est vertical et le plan H horizontal et si l'on compare avec un substrat de même nature (même verre et même couche) plan.

Le substrat est généralement quadrangulaire et destiné à être disposé verticalement en façade des bâtiments, le plan H étant alors horizontal et le plan V étant alors vertical. Le plan H est généralement parallèle à deux bords du substrat. Le plan V est alors parallèle aux deux autres bords du substrat.

De préférence, tout point de E est tel que l'angle phi entre la normale locale et un plan V orthogonal au substrat et orthogonal au plan H soit inférieur à 15° et de préférence inférieur à 5° (en valeur absolue).

La condition cumulative sur les angles téta et phi exprime le fait qu'une grande partie de la surface développée du substrat (ensemble des points E) voit sa normale locale dirigées vers le haut ou vers le bas, une fois monté en façade extérieur du bâtiment, comme ce serait le cas avec des motifs prismatiques horizontaux (arête des prismes horizontale). Si plusieurs plans H existent, on choisit de préférence comme plan H (à placer horizontalement en utilisation) un plan pour lequel l'ensemble E forme la plus grande surface. Un tel vitrage a vocation à être disposé en façade de bâtiment de sorte que le plan H soit horizontal et le plan V vertical. L'objectif est de renvoyer les rayons solaires réfléchis vers le ciel. Comme les rayons solaires impactent le substrat verrier avec une direction privilégiée (car venant du ciel), on munit le substrat verrier de motifs dont la géométrie tient compte de cette direction privilégiée des rayons incidents. Ce sont les points de l'ensemble E qui sont utiles pour remplir cette fonction.

Les points de l'ensemble E peuvent définir des couples de surfaces S1 et S2 formant entre elles un angle rentrant dans le substrat, ce qui définit également une arête rentrante. Ce qui vient d'être dit recouvre la possibilité que des points communs à S1 et S2 forment l'arête rentrante (à l'intersection de S1 et S2). L'arête rentrante peut également être formée par le prolongement de S1 et S2. C'est le cas notamment lorsque les surfaces comprenant S1 et S2 s'arrondissent avant de se rencontrer. En utilisation en façade, S1 et S2 sont de préférence orientées de sorte que S1 fait face au ciel et S2 fait face au sol. Une surface S1 est une surface d'un seul tenant, c'est à-dire continue, c'est-à-dire non fractionnée, exempt d'arrêté rentrante ou sortante et dont tous les points appartiennent à l'ensemble E. Il en est de même pour une surface S2. Les surfaces S1 et S2 peuvent être courbes ou planes. Généralement, elles sont toutes deux planes.

Le vecteur sortant normal en tout point de la surface S1 forme un angle alpha avec le substrat (c'est-à-dire le plan général du substrat) de préférence inférieur à 60°. Le vecteur sortant normal en tout point de la surface S2 forme un angle bêta avec le plan général du substrat. Les angles alpha et bêta peuvent être identiques. Cependant, l'un des angles alpha ou bêta peut être supérieur à l'autre, et dans ce cas, de préférence, plus de 80% et de manière encore préférée plus de 90% des couples S1/S2 sont orientés de façon identique en surface du substrat, l'orientation étant définie selon la place des angles alpha et bêta par rapport à l'arête de l'angle rentrant. En effet, les conditions sur les angles téta et phi ci-dessus exprimées ont pour conséquence que les arêtes rentrantes formées par les différents couples de surfaces S1 et S2 sont sensiblement parallèles. Il est donc possible de vérifier si l'orientation des couples concorde ou non. Dans ce cas, un plan H adapté est sensiblement parallèle aux arêtes rentrantes.

De préférence, l'angle alpha et l'angle bêta satisfont à la relation F > 0, le facteur F étant défini ainsi :

$$F = [0{,}0102 \times (\text{angle bêta})^2] - (0{,}071 \times \text{angle bêta}) + \text{angle alpha} - 45 \quad,$$

les angles alpha et bêta étant exprimés en degré.

Généralement, plusieurs couples de surfaces S1/S2 sont juxtaposés et forment des prismes juxtaposés en saillie du substrat. Un prisme est formé par l'association d'une surface S1 d'un couple du type S1/S2 avec une surface S2 d'un couple du type S1/S2 voisin. Ainsi, de préférence, plus de 80% de l'aire développée du substrat fait partie de surfaces prismatiques dont les arêtes sortantes forment au maximum entre elles un angle de 20° et forment au maximum avec le plan général du substrat un angle de 10°. Si ces arêtes sont courbes, on se fonde sur les tangentes aux arêtes, ce qui signifie que les tangentes aux arêtes sortantes forment au maximum entre elles un angle de 20° et forment au maximum avec le plan général du substrat un angle de 10°. Le substrat peut donc comprendre à sa surface une multiplicité de prismes juxtaposés et parallèles entre eux. La longueur des prismes peut faire toute la largeur du substrat. Les prismes sont généralement répétés les uns à côtés des autres avec un pas compris dans le domaine allant de 10 $\mu$m à 10 cm. Plus généralement, quel que soit le motif choisi en surface du substrat, celui-ci est généralement répété à la surface du substrat dans au moins une direction parallèle au plan général du substrat avec un pas compris dans le domaine allant de 10 $\mu$m à 10 cm, de préférence avec un pas compris dans le domaine allant de 0,5 mm à 5 mm. Pour le cas où la texture en surface du substrat selon l'invention est formée de prismes parallèles entre eux, on choisit de préférence comme plan H à placer horizontalement en utilisation celui qui est parallèle à la longueur des prismes.

Un substrat verrier selon l'invention peut comprendre une feuille de verre dont une des faces principales comprend des motifs en relief, et une couche réfléchissante appliquée sur la face principale comprenant lesdits motifs, les motifs formant des prismes comprenant des surfaces prismatiques du type S1 et S2, lesdits prismes étant parallèles entre eux, de sorte que leurs arêtes rentrantes et sortantes dans la longueur des prismes sont parallèles entre elles, tout point de S1 et S2 étant tel que la normale locale forme un angle d'au moins 25° avec un plan orthogonal au substrat et parallèle aux prismes (ce plan étant un plan H au sens de l'invention), les surfaces S1 et S2 représentent plus de 30% de l'aire développée de la surface principale du substrat portant les motifs.

La couche réfléchissante, notamment anti-solaire, est en elle-même bien connue de l'homme du métier. Elle contient généralement un métal tel que Ag, Nb, Cr ou Fe comme un inox. Elle peut être déposée par CVD ou par pulvérisation cathodique magnétron. Elle peut être formée de plusieurs couches. Une feuille de verre monolithique (dépourvue de couche mince) a toujours une réflexion énergétique inférieure à 10% au sens de la norme EN410. La couche réfléchissante, notamment anti-solaire, est une couche augmentant la réflexion énergétique du substrat verrier sur laquelle elle est appliquée. Le substrat verrier comprenant la couche réfléchissante, notamment anti-solaire, présente une réflexion énergétique supérieure à celle du verre sur laquelle elle est appliquée, et de préférence supérieure à 20% voire même supérieure à 40% voire même supérieure à 60% au sens de la norme EN410. Ces valeurs caractérisent la propriété réfléchissante du couple verre/couche exempt de tout motif (surface lisse). Cette réflexion peut donc être mesurée sur un substrat de même nature, c'est-à-dire comprenant le même couple verre/couche (même verre de même épaisseur + même couche de même épaisseur) mais présentant une surface plane sans les motifs renvoyant la lumière vers le ciel.

La couche réfléchissante est appliquée en tout point de la surface comprenant les motifs en relief, et donc notamment tous les points de l'ensemble E. Selon le procédé de dépôt choisi, cette couche n'a pas nécessairement la même épaisseur en tous points de cette surface, mais elle est présente partout, et généralement partout en une épaisseur comprise entre 10 et 1000 nm. Généralement le rapport de l'épaisseur maximale sur l'épaisseur minimale est inférieur à 3. La couche réfléchissante est appliquée partout, mais, le cas échéant, elle n'est pas déposée ou est enlevé dans la zone périphérique du vitrage (à moins de 1 cm du bord) afin de prévenir le problème de son vieillissement, lequel intervient généralement par la tranche. Cette absence de couche en périphérie est appelée « émargement ». Ainsi, la couche réfléchissante est appliquée en tout point de l'ensemble E, hors éventuel émargement. De même, généralement, la couche réfléchissante est appliquée en tout point de la face principale comprenant lesdits motifs, hors éventuel émargement. Bien entendu, l'homme du métier sait bien que des trous, généralement de taille de l'ordre de quelques microns à quelques dizaines de microns peuvent exister ici ou là dans la couche, ces défauts ponctuels et courants n'empêchant pas de dire que la couche est appliquée partout.

De préférence, le substrat verrier selon l'invention présente une bonne transmission de la lumière dans le domaine du visible. Notamment le rapport de la transmission lumineuse Tl sur le facteur solaire g est compris dans le domaine allant de 0,7 à 3 au sens de la norme EN410 (illuminant D65 ; 2° observateur) (version 2010 de la EN410 comme chaque fois qu'il est question de cette norme dans la présente demande).

La texture déforme généralement la vision directe au travers du substrat verrier si la couche réfléchissante, notamment anti-solaire, déposée sur la face texturée est à l'air libre. On peut cependant récupérer une bonne vision directe non déformée au travers du substrat en comblant les creux de la texture par une matière transparente de façon à recouvrir une surface plane. Il convient que la différence entre l'indice de réfraction du verre (sous la couche réfléchissante) et l'indice de réfraction de la matière transparente soit, en valeur absolue, inférieure à 0,02 et de préférence inférieure à 0,01. Cette matière transparente peut être un matériau polymère du type polyvinyle de butyrale (PVB) couramment utilisé comme intercalaire de vitrages feuilletés. Ainsi, le substrat verrier selon l'invention peut être incorporé à un vitrage feuilleté comprenant un second substrat verrier et un intercalaire en un matériau polymère placé entre le substrat verrier selon l'invention et le second substrat verrier, la face texturé étant en contact avec le matériau polymère, lequel remplit les creux de ladite face texturée. Un tel vitrage présente une bonne vision directe tout en étant capable de renvoyer vers le ciel les rayons solaires réfléchis à la surface texturée.

On peut également incorporer le substrat verrier selon l'invention à un vitrage feuilleté comprenant au moins un autre substrat verrier et autant d'intercalaire en matériau polymère qu'il n'en faut pour séparer les différents substrats verrier, la texture du substrat selon l'invention étant en position externe. Dans ce cas, la couche réfléchissante, notamment anti-solaire, est à l'air libre et la vision directe au travers du vitrage est déformée. En utilisation en façade de bâtiment, ce vitrage feuilleté est de préférence placé de sorte que la couche réfléchissante soit tournée vers l'extérieur du bâtiment (couche en contact avec l'air ambiant extérieur au bâtiment).

Le substrat verrier selon l'invention peut également être incorporé dans un vitrage isolant, c'est-à-dire à un vitrage comprenant au moins deux substrats verriers séparés par une lame de gaz (air, azote, argon, etc). Dans ce cas, le substrat selon l'invention peut être placé dans le vitrage de sorte que la texture soit tournée vers la lame de gaz. La couche réfléchissante, notamment anti-solaire, est alors en contact avec la lame de gaz. Cependant, le substrat selon l'invention est de préférence placé dans le vitrage de sorte que la texture soit en position externe. La couche réfléchissante, notamment anti-solaire, est alors en contact avec l'air ambiant extérieur au vitrage. La texture peut être tournée vers l'intérieur du bâtiment. Cependant, la texture est de préférence tournée vers l'extérieur du bâtiment. On peut également placer le substrat verrier selon l'invention dans un vitrage feuilleté comme expliqué précédemment avec l'intercalaire en matériau polymère remplissant les creux de la texture, et placer ce vitrage feuilleté dans un vitrage isolant, la texture du substrat selon l'invention étant tournée vers l'extérieur du vitrage isolant, et en utilisation vers l'extérieur du bâtiment. On obtient ainsi un vitrage isolant combinant une bonne vision directe et un bon albédo.

Le substrat verrier selon l'invention est incorporé dans une fenêtre en façade de bâtiment. De préférence, le substrat selon l'invention est positionné de sorte que la couche réfléchissante, notamment anti-solaire, soit tournée vers l'extérieur du bâtiment. L'inverse est également possible. Généralement, le substrat selon l'invention est positionné de sorte que la couche réfléchissante, notamment anti-solaire, soit en contact avec l'air ambiant extérieur au bâtiment. Le substrat selon l'invention est orienté dans la fenêtre de sorte que les rayons solaires soient renvoyés dans une direction au-dessus de l'horizontale, vers le ciel. Dans le cas de prismes juxtaposés, les arêtes rentrantes et les arêtes en saillie des prismes, parallèles entre elles, sont horizontales en position d'utilisation dans la fenêtre. On parle alors de prismes horizontaux. Ainsi, l'invention concerne également une fenêtre de façade extérieure de bâtiment comprenant le substrat selon l'invention. L'invention concerne également le bâtiment comprenant en façade extérieure le substrat selon l'invention, celui-ci étant orienté de sorte qu'un plan H soit horizontal une fois monté sur le bâtiment. Ainsi l'invention concerne également l'utilisation d'un substrat selon l'invention comme fenêtre de bâtiment réfléchissant du rayonnement du soleil impactant directement le substrat, pour que la puissance (mesurée en Watts) du rayonnement solaire réfléchi dans une direction ascendante soit supérieure à 30% et de préférence 50% de la puissance totale réfléchie, quelle que soit la position zénithale du soleil comprise entre 0° et 70° par rapport à l'horizontale. Une position zénithale du soleil de 0° correspond au lever ou au coucher du soleil. Dans cette utilisation, le substrat est généralement en position verticale. Pour une vitre ordinaire plane et sans motif, placée verticalement dans une fenêtre, le rayonnement venant directement du soleil et impactant la vitre est partiellement réfléchi mais 100% de ce rayonnement réfléchi est dirigé vers le bas. Grâce à l'invention, une partie importante du rayonnement réfléchi va vers le haut. Dans la présente demande, tout angle est donné en valeur absolue. Un angle donné par rapport à une direction l'est par rapport au vecteur sortant du substrat contenu dans cette direction. Lorsqu'un angle est donné par rapport à un plan H, il l'est par rapport à la partie du plan H sortante du substrat. Lorsqu'un angle est donné par rapport à un plan V, il l'est par rapport à la partie du plan V sortante du substrat. Lorsqu'un angle x est donné par rapport au plan général du substrat, il s'agit du plus petit angle formé avec le plan général du substrat, inférieur ou égal à 90°, et pas de la partie y supérieure ou égale à 90°, complémentaire à 180° de cet angle (x+y=180°).

## Exemples

Un substrat verrier est muni d'une multiplicité de prismes identiques parallèles et juxtaposés à sa surface formant une alternance de surfaces P1 et P2 du haut en bas, le substrat étant placé verticalement en façade de bâtiment pour recevoir les rayons solaires arrivant avec un angle entre 30 et 60° par rapport à l'horizontale et avec un angle azimutale nul. Les prismes étaient longs comme la largeur du substrat, ce qui veut dire que la longueur des arêtes en saillie était horizontale et faisait la largeur du substrat. La surface P1 fait face au ciel alors que la surface P2 fait face au sol. Le plan H est parallèle aux arrêtes rentrantes et aux arêtes en saillie (c'est-à-dire aux arêtes « sortantes ») des prismes. Pour ce type de texture, l'angle phi est nul pour 100% de la surface du substrat. Les motifs étaient recouverts d'une couche 100% réfléchissante. Le tableau 1 rassemble les résultats en pourcentage de la puissance lumineuse réfléchie vers le haut par rapport à la puissance lumineuse incidente, en fonction de l'angle alpha que forme la normale à la surface P1 avec le substrat et en fonction de l'angle bêta que forme la normale à la surface P2 avec le substrat, et du facteur F ainsi défini :

$$F = [0{,}0102 \times (\text{angle bêta})^2] - (0{,}071 \times \text{angle bêta}) + \text{angle alpha} - 45 \,.$$

La valeur consignée dans le tableau est la moyenne correspondant à quatre angles d'incidence : 30°, 40°, 50°, 60°. L'angle alpha est égal à 90° moins l'angle téta que forme la normale à la surface P1 avec l'horizontale. L'angle bêta est égal à 90° moins l'angle téta que forme la normale à la surface P2 avec l'horizontale. La surface P1 est du type E si l'angle téta y est d'au moins 25°. La surface P2 est du type E si l'angle téta y est d'au moins 25°.

Tableau 1

| Ex n° | Alpha P1 | Téta P1 | Bêta P2 | Téta P2 | % de la surface développée représenté par P1 | % de la surface développée représenté par P2 | % de la surface développée avec téta > ou = 25° | F | Résultat (%) |
|---|---|---|---|---|---|---|---|---|---|
| 1 | 80 | 10 | 80 | 10 | 50,0% | 50,0% | 0% | 94,6 | 0 |
| 2 | 70 | 20 | 70 | 20 | 50,0% | 50,0% | 0% | 70,01 | 0 |
| 3 | 60 | 40 | 70 | 20 | 40,6% | 59,4% | 40,6% | 60,01 | 35 |
| 4 | 40 | 50 | 80 | 10 | 18,5% | 81,5% | 18,5% | 54,6 | 20 |
| 5 | 40 | 50 | 70 | 20 | 30,9% | 69,1% | 30,9% | 40,01 | 30 |
| 6 | 40 | 50 | 60 | 30 | 39,5% | 60,5% | 100% | 27,46 | 80 |
| 7 | 40 | 50 | 40 | 50 | 50,0% | 50,0% | 100% | 8,48 | 100 |
| 8 | 10 | 80 | 55 | 35 | 36,8% | 63,2% | 100% | -8,05 | 20 |
| 9 | 20 | 70 | 50 | 40 | 40,6% | 59,4% | 100% | -3,05 | 20 |

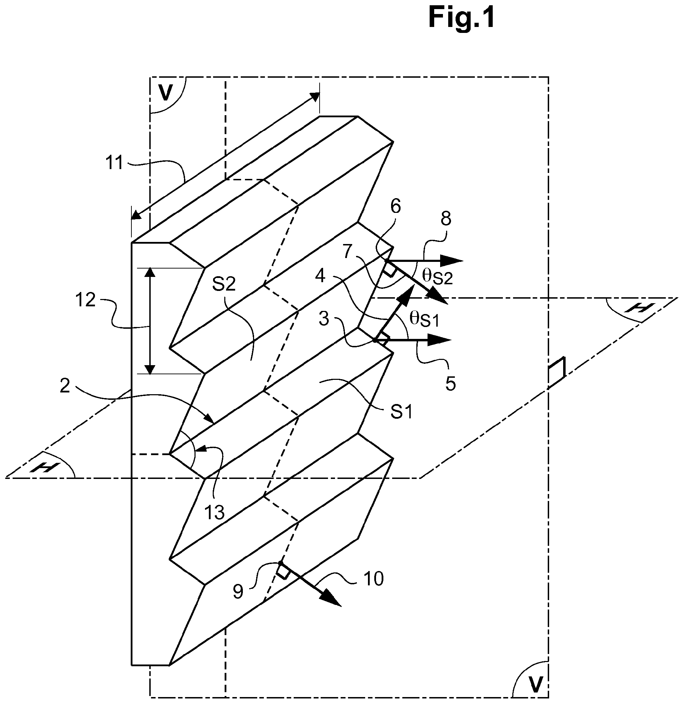

La figure 1 représente un substrat verrier 1 selon l'invention en perspective. Une face principale de ce substrat est texturée de motifs prismatiques identiques et juxtaposés. Cette texture est recouverte d'une couche réfléchissante (non représentée) en contact avec l'air ambiant. La texture consiste en une alternance de surfaces S1 tournées vers le ciel et de surfaces S2 tournées vers le sol et dont l'intersection forme un angle rentrant 13 définissant une arête rentrante 2. Ce motif fait toute la largeur 11 du substrat verrier et il est répété verticalement avec un pas 12. Si l'on choisit comme plan H le plan orthogonal au substrat et passant par l'arête rentrante 2, on voit que tout point de la surface texturée est telle que la normale locale forme avec le plan H un angle supérieur à 25°. Un point 3 de la surface S1 est tel que la normale locale 4 en ce point forme avec le vecteur sortant 5 parallèle au plan H un angle $\text{téta}_{S1}$ supérieur à 25°. Un point 6 de la surface S2 est tel que la normale locale 7 en ce point forme avec le vecteur sortant 8 parallèle au plan H un angle $\text{téta}_{S2}$ supérieur à 25°. Ainsi, dans cet exemple, l'ensemble E des points de la surface vérifiant la condition selon l'invention de l'angle téta d'au moins 25° représente 100% de l'aire développée du substrat. Dans cet exemple, pour tout point 9 de la surface, l'angle phi entre la normale locale 10 et le plan V (orthogonal au substrat et au plan H) est nul puisque toute normale locale est parallèle au plan V. La texture forme une multiplicité de prismes identiques, juxtaposés et parallèles entre eux en surface du substrat. Toutes les arêtes, rentrantes et en saillie, sont parallèles entre elles et parallèles au plan H. Avantageusement, ce substrat est placé en fenêtre de façade extérieure de bâtiment de sorte que la texture soit tournée vers l'extérieure du bâtiment, le plan H étant horizontal et le plan V étant vertical, la face S1 étant tournée vers le ciel et la face S2 étant tournée vers le sol.

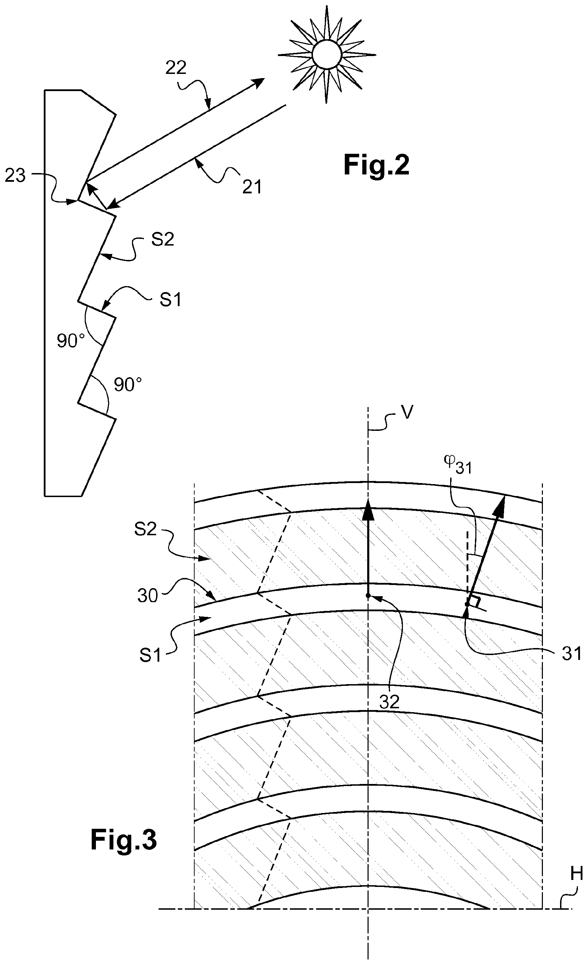

La figure 2 représente un substrat verrier selon l'invention dont la texture consiste en une alternance de surfaces S1 tournées vers le ciel et de surfaces S2 tournées vers le sol. Les surfaces S1 et S2 forment entre elles un angle rentrant de 90° définissant des arêtes rentrantes. Ce substrat est placé verticalement en façade extérieure de bâtiment de sorte que la texture soit tournée vers l'extérieur, toutes les arêtes rentrantes 23 étant horizontales. Les rayons du soleil 21 subissent deux réflexions sur les surfaces S1 et S2 et sont renvoyés vers le ciel selon 22. Le rayon réfléchi 22 est ici parallèle au rayon incident 21 du fait de l'angle de 90° entre les faces de réflexion S1 et S2.

La figure 3 représente un substrat texturé selon l'invention vu de face. La texture comprend une multiplicité de surfaces S1 et S2 courbes formant à leur jonction un angle rentrant dans le substrat définissant des arêtes rentrantes 30. La surface S1 fait face au ciel alors que la surface S2 fait face au sol. Les normales locales ne forment pas toutes le même angle phi avec le plan vertical V. Le point 31 a sa normale locale formant l'angle $\text{phi}_{31}$ avec le plan V. Le point 32 a sa normale locale formant un angle nul avec le plan V.

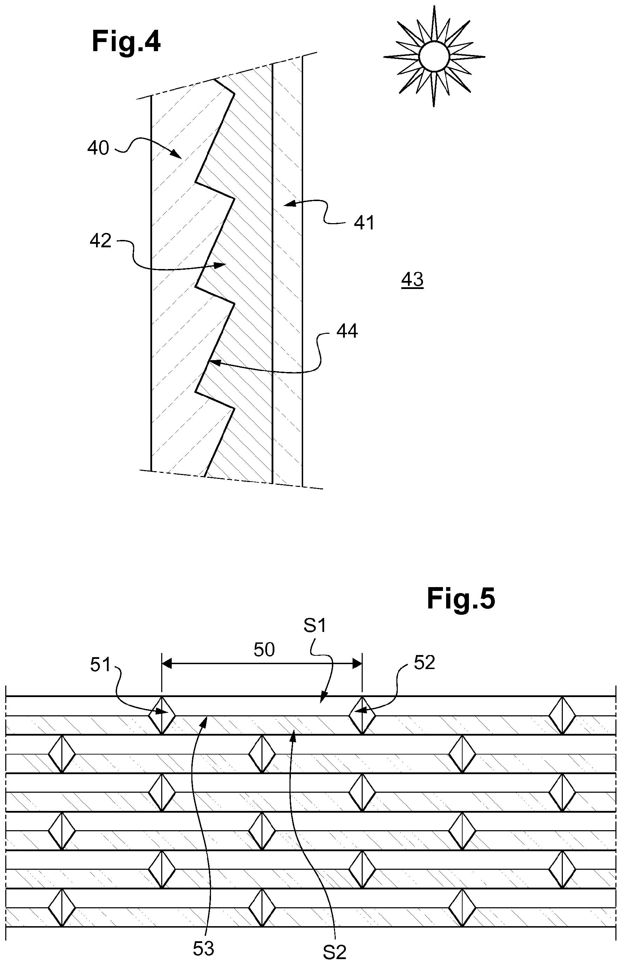

La figure 4 représente un vitrage feuilleté comprenant un substrat verrier 40 texturé selon l'invention muni d'une couche antisolaire 44 appliquée sur les motifs de la texture, un second substrat verrier 41 constitué d'une feuille de verre monolithique plane munie d'aucune couche, et d'une feuille intercalaire 42 en PVB. Le PVB remplit tous les creux des motifs. Un tel vitrage ne déforme pas la vision le traversant et renvoi les rayons réfléchis sur la couche anti-solaire vers le ciel. Ce substrat a ses faces principales verticales et le substrat verrier selon l'invention a sa face texturée orientée (c'est-à-dire tournée) vers l'extérieur 43.

La figure 5 représente un ensemble de prismes identiques juxtaposés en surface. La longueur 50 de ces prismes ne fait pas toute la largeur du substrat pour des raisons de complexité de fabrication et de propriété mécanique du substrat. Les surfaces de ces prismes sont planes. Les prismes comprennent une surface S1 et une surface S2 dont la rencontre forme un angle en saillie du substrat définissant une arête 53 en saillie (c'est-à-dire « sortante »). Les prismes se finissent sur leurs côtés par deux petites surfaces triangulaires 51 et 52. Par rapport à un plan H orthogonal au substrat et parallèle aux longueurs des prismes, ces petites surfaces triangulaires ne comprennent pas de points de l'ensemble E car l'angle téta entre la normale locale en tout point de ces petites surfaces et un plan horizontal est égal à 0° (donc inférieur à 25°). On remarque de plus que l'angle phi entre toute normale locale sur ces petites surfaces 51 et 52 et un plan vertical orthogonal au substrat est supérieur à 15°.

## Revendications

1. Substrat verrier présentant une transmission lumineuse dans le visible comprenant une feuille de verre dont une des faces principales comprend des motifs en relief, et une couche réfléchissante appliquée en tout point de la face principale comprenant lesdits motifs, hors éventuel émargement, **caractérisé en ce qu'**il existe un plan H orthogonal au substrat de sorte que l'ensemble E des points de la surface du substrat tels que l'angle téta entre la normale locale à la surface et le plan H soit d'au moins 25°, représente plus de 30% de l'aire développée de la surface principale du substrat portant les motifs.

2. Substrat selon la revendication précédente, **caractérisé en ce que** la couche réfléchissante est appliquée en tout point de l'ensemble E, hors éventuel émargement.

3. Substrat selon l'une des revendications précédentes, **caractérisé en ce que** le substrat revêtu de la couche réfléchissante est tel qu'il existe une bande spectrale d'au moins 50 nm de largeur entre 250 et 2500 nm pour laquelle la réflexion est supérieure à 20% et de manière encore préférée supérieure à 40%, en incidence normale.

4. Substrat selon la revendication précédente **caractérisé en ce que** la bande spectrale d'au moins 50 nm de largeur existe entre 780 et 1200 nm.

5. Substrat selon l'une des revendications précédentes, **caractérisé en ce que** sa transmission lumineuse Tl mesurée selon la norme EN410 est supérieure à 40%, voire supérieure à 60%.

6. Substrat selon l'une des revendications précédentes, **caractérisé en ce que** l'ensemble E représente plus de 50% et de préférence plus de 80% de l'aire développée du substrat.

7. Substrat selon l'une des revendications précédente, **caractérisé en ce qu'**en tout point de E l'angle phi entre la normale locale et un plan V orthogonal au substrat et orthogonal au plan H est inférieur à 15° et de préférence inférieur à 5°.

8. Substrat selon l'une des revendications précédentes, **caractérisé en ce que** l'ensemble E forme des couples de surfaces S1 et S2 formant entre elles un angle rentrant dans le substrat définissant une arête rentrante, tout point de S1 voyant son vecteur sortant normal formant un angle alpha avec le substrat inférieur à 60° et tout point de S2 voyant son vecteur sortant normal formant un angle bêta avec le substrat.

9. Substrat selon la revendication précédente, **caractérisé en ce que** l'un des angles alpha ou bêta est supérieur à l'autre, plus de 80% des couples et même plus de 90% des couples étant orientés de façon identique en surface du substrat, l'orientation étant définie selon la place des angles alpha et bêta par rapport à l'angle rentrant.

10. Substrat selon l'une des deux revendications précédentes, **caractérisé en ce que** l'angle alpha et l'angle bêta satisfont à F > 0 , le facteur F étant défini par

$$F = [0{,}0102 \times (angle\ bêta)^2] - (0{,}071 \times angle\ bêta) + angle\ alpha - 45$$

11. Substrat selon l'une des trois revendications précédentes, **caractérisé en ce que** plusieurs couples sont juxtaposés et forment des prismes juxtaposés en saillie du substrat.

**12.** Substrat selon la revendication précédente, **caractérisé en ce que** plus de 80% de l'aire développée du substrat forme des surfaces prismatiques dont les arêtes sortantes forment au maximum entre elles un angle de 20° et forment au maximum avec le plan général du substrat un angle de 10°.

**13.** Substrat selon l'une des revendications précédentes, **caractérisé en ce que** la couche réfléchissante contient un métal, notamment choisi parmi Ag, Nb, Cr ou Fe.

**14.** Substrat selon l'une des revendications précédentes, **caractérisé en ce que** la couche réfléchissante présente une épaisseur comprise entre 10 nm et 1000 nm.

**15.** Substrat selon l'une des revendications précédentes, **caractérisé en ce que** la couche réfléchissante augmente la réflexion énergétique du substrat sur laquelle elle est appliquée.

**16.** Substrat selon l'une des revendications précédentes, **caractérisé en ce que** le substrat présente une réflexion énergétique supérieure à 20% voire même supérieure à 40% voire même supérieure à 60% au sens de la norme EN410, ladite réflexion étant déterminée sur un substrat de même nature exempt de motifs.

**17.** Substrat selon l'une des revendications précédentes, **caractérisé en ce que** le rapport de la transmission lumineuse Tl sur le facteur solaire g est compris dans le domaine allant de 0,7 à 3 au sens de la norme EN410.

**18.** Substrat selon l'une des revendications précédentes, **caractérisé en ce que** les creux des motifs en relief sont comblés par une matière transparente formant une surface plane, la différence entre l'indice de réfraction du verre et l'indice de réfraction de la matière transparente étant, en valeur absolue, inférieure à 0,02 et de préférence inférieure à 0,01.

**19.** Vitrage feuilleté comprenant le substrat de la revendication précédente et un second substrat verrier, la matière transparente étant un PVB faisant office d'intercalaire entre les substrats verriers.

**20.** Fenêtre de façade extérieure de bâtiment comprenant le substrat ou le vitrage de l'une des revendications précédentes ou bâtiment comprenant en façade extérieure le substrat ou le vitrage de l'une des revendications précédentes, le substrat étant orienté de sorte qu'un plan H soit horizontal une fois monté sur le bâtiment.

**21.** Fenêtre ou bâtiment selon la revendication précédente, **caractérisé en ce que** les motifs sont tournés vers l'extérieur du bâtiment.

**22.** Fenêtre ou bâtiment selon l'une des deux revendications précédentes, **caractérisé en ce que** les motifs sont des prismes horizontaux juxtaposés.

**23.** Utilisation d'un substrat de l'une des revendications précédentes de substrat comme fenêtre de bâtiment réfléchissant du rayonnement du soleil impactant directement le substrat, pour que la puissance du rayonnement solaire réfléchi dans une direction ascendante soit supérieure à 30% et de préférence 50% de la puissance totale réfléchie, quelle que soit la position zénithale du soleil comprise entre 0° et 70° par rapport à l'horizontale.

**Patentansprüche**

**1.** Glassubstrat mit einer Durchlässigkeit für sichtbares Licht, umfassend eine Glasscheibe, von der eine der Hauptflächen Reliefmotive umfasst, und eine reflektierende Schicht, die an jeder Stelle der Hauptfläche aufgebracht ist, umfassend die Motive, eventueller Randstreifen ausgenommen, **dadurch gekennzeichnet, dass** es eine Ebene H orthogonal zum Substrat derart gibt, dass die Einheit E der Punkte der Oberfläche des Substrats so wie der Winkel Theta zwischen der Lokalnormalen auf der Oberfläche und der Ebene H mindestens 25° beträgt, mehr als 30 % des entwickelte Bereichs der Hauptoberfläche des Substrats darstellt, das die Motive trägt.

**2.** Substrat nach dem vorangegangenen Anspruch, **dadurch gekennzeichnet, dass** die reflektierende Schicht an jedem Punkt der Einheit E, eventueller Randstreifen ausgenommen, aufgebracht ist.

**3.** Substrat nach einem der vorangegangenen Ansprüche, **dadurch gekennzeichnet, dass** das mit der reflektierenden Schicht beschichtete Substrat derart ist, dass es ein Spektralband von mindestens 50 nm Breite zwischen 250 und 2500 nm gibt, für welches die Reflexion bei normalem Einfall größer als 20 % und noch vorzugsweise größer als 40 % ist.

4. Substrat nach dem vorangegangenen Anspruch, **dadurch gekennzeichnet, dass** es das Spektralband von mindestens 50 nm Breite zwischen 780 und 1200 nm gibt.

5. Substrat nach einem der vorangegangenen Ansprüche, **dadurch gekennzeichnet, dass** seine Lichtdurchlässigkeit Tl, gemessen nach der Norm EN410, größer als 40 %, ja sogar größer als 60 % ist.

6. Substrat nach einem der vorangegangenen Ansprüche, **dadurch gekennzeichnet, dass** die Einheit E mehr als 50 % und vorzugsweise mehr als 80 % des entwickelten Bereichs des Substrats darstellt.

7. Substrat nach einem der vorangegangenen Ansprüche, **dadurch gekennzeichnet, dass** an jedem Punkt von E der Winkel phi zwischen der Lokalnormalen und einer Ebene V orthogonal zum Substrat und orthogonal zur Ebene H kleiner als 15° und vorzugsweise kleiner als 5° ist.

8. Substrat nach einem der vorangegangenen Ansprüche, **dadurch gekennzeichnet, dass** die Einheit E Paare von Oberflächen S1 und S2 bildet, die zwischen sich einen in das Substrat einfallenden Winkel bilden, der eine einspringende Kante definiert, wobei jeder Punkt von S1 mit Blick auf seinen normal ausgehenden Vektor einen Winkel Alpha mit dem Substrat von kleiner als 60° bildet und jeder Punkt von S2 mit Blick auf seinen normal ausgehenden Vektor einen Winkel Beta mit dem Substrat bildet.

9. Substrat nach dem vorangegangenen Anspruch, **dadurch gekennzeichnet, dass** einer der Winkel Alpha oder Beta größer als der andere ist, wobei mehr als 80 % der Paare und sogar mehr als 90 % der Paare identisch auf der Oberfläche des Substrats ausgerichtet sind, wobei die Ausrichtung gemäß der Position der Winkel Alpha und Beta in Bezug auf den Einfallswinkel definiert ist.

10. Substrat nach einem der vorangegangenen Ansprüche, **dadurch gekennzeichnet, dass** der Winkel Alpha und der Winkel Beta F > 0 entsprechen, wobei der Faktor F definiert ist durch

$$F = [0{,}0102 \times (\text{Winkel Beta})^2] - (0{,}071 \times \text{Winkel Beta}) + \text{Winkel Alpha} - 45$$

11. Substrat nach einem der drei vorangegangenen Ansprüche, **dadurch gekennzeichnet, dass** mehrere Paare nebeneinanderliegen und nebeneinanderliegende Prismen bilden, die aus dem Substrat herausragen.

12. Substrat nach dem vorangegangenen Anspruch, **dadurch gekennzeichnet, dass** mehr als 80 % des entwickelten Bereichs des Substrats prismatische Oberflächen bilden, deren ausgehende Kanten maximal zwischen sich einen Winkel von 20° bilden und maximal mit der allgemeinen Ebene des Substrats einen Winkel von 10° bilden.

13. Substrat nach einem der vorangegangenen Ansprüche, **dadurch gekennzeichnet, dass** die reflektierende Schicht ein Metall enthält, welches vor allem aus Ag, Nb, Cr oder Fe ausgewählt ist.

14. Substrat nach einem der vorangegangenen Ansprüche, **dadurch gekennzeichnet, dass** die reflektierende Schicht eine Stärke aufweist, die zwischen 10 nm und 1000 nm liegt.

15. Substrat nach einem der vorangegangenen Ansprüche, **dadurch gekennzeichnet, dass** die reflektierende Schicht die energetische Reflexion des Substrats erhöht, auf dem sie aufgebracht ist.

16. Substrat nach einem der vorangegangenen Ansprüche, **dadurch gekennzeichnet, dass** das Substrat eine energetische Reflexion von mehr als 20 %, ja sogar mehr als 40 %, ja sogar mehr als 60 % gemäß der Norm EN410 aufweist, wobei die Reflexion auf einem Substrat derselben Art ohne Motive bestimmt ist.

17. Substrat nach einem der vorangegangenen Ansprüche, **dadurch gekennzeichnet, dass** das Verhältnis der Lichtdurchlässigkeit Tl zum Sonnenfaktor g im Bereich von 0,7 bis 3 gemäß der Norm EN410 liegt.

18. Substrat nach einem der vorangegangenen Ansprüche, **dadurch gekennzeichnet, dass** die Vertiefungen der Reliefmotive mit einem transparenten Material gefüllt sind, eine ebene Oberfläche bildend, wobei die Differenz zwischen dem Brechungsindex des Glases und dem Brechungsindex des transparenten Materials im Absolutwert kleiner als 0,02 und vorzugsweise kleiner als 0,01 ist.

19. Verbundverglasung, umfassend das Substrat nach dem vorangegangenen Anspruch und ein zweites Glassubstrat, wobei das transparente Material ein PVB ist, welches als Zwischenschicht zwischen den Glassubstraten dient.

20. Gebäudeaußenwandfenster, umfassend das Substrat oder die Verglasung nach einem der vorangegangenen Ansprüche oder Gebäude, umfassend an der Außenfassade das Substrat oder die Verglasung nach einem der vorangegangenen Ansprüche, wobei das Substrat so ausgerichtet ist, dass nach der Montage an dem Gebäude eine Ebene H horizontal ist.

21. Fenster oder Gebäude nach dem vorangegangenen Anspruch, **dadurch gekennzeichnet, dass** die Motive nach außerhalb des Gebäudes zeigen.

22. Fenster oder Gebäude nach einem der zwei vorangegangenen Ansprüche, **dadurch gekennzeichnet, dass** die Motive nebeneinanderliegende horizontale Prismen sind.

23. Verwendung eines Substrats nach einem der vorangegangenen Ansprüche als Gebäudefenster, das Sonnenstrahlung reflektiert, die direkt auf das Substrat auftrifft, damit die Leistung der in eine Aufwärtsrichtung reflektierten Sonnenstrahlung größer als 30 % und vorzugsweise 50 % der gesamten reflektierten Leistung ist, unabhängig von der Zenitposition der Sonne zwischen 0° und 70° in Bezug auf die Horizontale.

**Claims**

1. A glass-based substrate having a transmission of light in the visible wavelength range, comprising a glass sheet, one of the main faces of which comprises relief patterns, and a reflecting layer applied at every point of the main face comprising the said patterns, aside from any potential edge exclusion, , **characterized in that** there exists a plane H orthogonal to the substrate such that the set E of points on the surface of the substrate, such that the angle theta between the local normal to the surface and the plane H is at least 25°, represents more than 30% of the developed area of the main surface of the substrate carrying the patterns.

2. The substrate as claimed in the preceding claim, **characterized in that** the reflecting layer is applied at every point of the set E, aside from any potential edge exclusion.

3. The substrate as claimed in one of the preceding claims, **characterized in that** the substrate coated with the reflecting layer is such that there exists a spectral band with a width of at least 50 nm between 250 and 2500 nm for which the reflection is greater than 20% and more preferable greater than 40%, in normal incidence.

4. The substrate as claimed in the preceding claim **characterized in that** the spectral band with a width of at least 50 nm exists between 780 and 1200 nm.

5. The substrate as claimed in one of the preceding claims, **characterized in that** its light transmission TI measured according to the standard EN410 is higher than 40%, or even higher than 60%.

6. The substrate as claimed in one of the preceding claims, **characterized in that** the set E represents more than 50% and preferably more than 80% of the developed area of the substrate.

7. The substrate as claimed in one of the preceding claims, **characterized in that** at any point of E the angle phi between the local normal and a plane V orthogonal to the substrate and orthogonal to the plane H is less than 15° and preferably less than 5°.

8. The substrate as claimed in one of the preceding claims, **characterized in that** the set E forms pairs of surfaces S1 and S2 forming between them a re-entrant angle in the substrate defining a re-entrant edge, every point of S1 seeing its normal outward vector forming an angle alpha with the substrate less than 60° and every point of S2 seeing its normal outward vector forming an angle beta with the substrate.

9. The substrate as claimed in the preceding claim, **characterized in that** one of the angles alpha or beta is greater than the other, more than 80% of the pairs and even more than 90% of the pairs being oriented in an identical fashion on the surface of the substrate, the orientation being defined according to the place of the angles alpha and beta with respect to the re-entrant angle.

10. The substrate as claimed in one of the two preceding claims, **characterized in that** the angle alpha and the angle beta satisfy F > 0 , the factor F being defined by

$$F = [0.0102 \times (\text{angle beta})^2] - (0.071 \times \text{angle beta}) + \text{angle alpha} - 45$$

11. The substrate as claimed in one of the three preceding claims, **characterized in that** several pairs are juxtaposed and form juxtaposed prisms protruding from the substrate.

12. The substrate as claimed in the preceding claim, **characterized in that** more than 80% of the developed area of the substrate forms prismatic surfaces whose protruding edges form, at the most, an angle of 20° between them and form, at the most, an angle of 10° with the general plane of the substrate.

13. The substrate as claimed in one of the preceding claims, **characterized in that** the reflecting layer contains a metal, notably chosen from amongst Ag, Nb, Cr or Fe.

14. The substrate as claimed in one of the preceding claims, **characterized in that** the reflecting layer has a thickness in the range between 10 nm and 1000 nm.

15. The substrate as claimed in one of the preceding claims, **characterized in that** the reflecting layer increases the energy reflection of the substrate to which it is applied.

16. The substrate as claimed in one of the preceding claims, **characterized in that** the substrate exhibits an energy reflection higher than 20% or higher than 40% or even higher than 60% in the sense of the standard EN410, the said reflection being determined on a substrate of the same nature without relief patterns.

17. The substrate as claimed in one of the preceding claims, **characterized in that** the ratio of the light transmission Tl over the solar factor g is included in the range going from 0.7 to 3 in the sense of the standard EN410.

18. The substrate as claimed in one of the preceding claims, **characterized in that** the hollows of the relief patterns are filled with a transparent material forming a plane surface, the difference between the index of refraction of the glass and the index of refraction of the transparent material being, in absolute value, less than 0.02 and preferably less than 0.01.

19. A laminated glazing unit comprising the substrate of preceding claim and a second glass-based substrate, the transparent material being a PVB acting as interlayer between the glass based substrates.

20. A building exterior facade window comprising the substrate or the glazing of one of the preceding claims or a building comprising on the exterior facade the substrate or the glazing of one of the preceding claims, the substrate being oriented in such a manner that a plane H is horizontal once installed on the building.

21. The window or building as claimed in the preceding claim, **characterized in that** the patterns are facing the outside of the building.

22. The window or building as claimed in one of the two preceding claims, **characterized in that** the patterns are juxtaposed horizontal prisms.

23. A use of a substrate of one of the preceding claims as a building window reflecting radiation from the sun directly impacting the substrate, so that the power of the solar radiation reflected in an ascending direction is greater than 30%, and preferably 50%, of the total reflected power, irrespective of the zenith position of the sun in the range between 0° and 70° with respect to the horizontal.

# Fig.1

22

23

21

**Fig.2**

S2

S1

90°

90°

S2

30

S1

V

φ31

32

31

H

**Fig.3**

# Fig.4

# Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3255665 A
- EP 1072752 A
- US 2011310473 A